# EUROPEAN PATENT SPECIFICATION

(11) **EP 1 628 289 B1**
(45) Date of publication and mention of the grant of the patent: **16.09.2009**
(21) Application number: 05025989.4
(22) Date of filing: 22.03.2002
(51) Int. Cl.: G10L 15/06

(54) **Speech recognition system using implicit speaker adaptation**
Spracherkennungsystem mittels impliziter Sprecheradaptation
Système de reconnaissance de la parole avec adaptation implicite au locuteur

(30) Priority: 28.03.2001 US 821606
(43) Date of publication of application: 22.02.2006
(62) Divisional of application: 02725288.1
(73) Proprietor: Qualcomm, Incorporated, San Diego, CA 92121-1714 (US)
(72) Inventor: Malayath, Narendranath, San Diego, CA 92128 (US); Dejaco, Andrew P., San Diego, CA 92131 (US); Chang, Chienchung, Rancho Santa Fe, CA 92067 (US); Jalil, Suhail, San Diego, CA 92121-1714 (US); Ning, Bi, San Diego, CA 92128 (US); Garudadri, Harinath, San Diego, CA 62129 (US)
(74) Representative: Geyer, Ulrich F.

(56) References cited:
- EP-A- 1 011 094
- WO-A-02/07148
- WO-A-02/21513
- US-A- 5 091 947
- US-A- 5 734 793

## Description

### BACKGROUND

### Field

The present invention relates to speech signal processing. More particularly, the present invention relates to a novel speech recognition method and apparatus for achieving improved performance through unsupervised training.

### Background

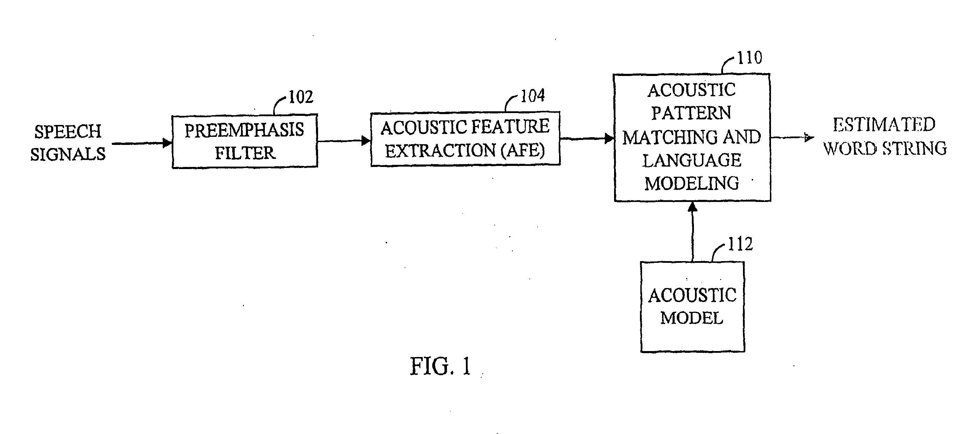

Speech recognition represents one of the most important techniques to endow a machine with simulated intelligence to recognize user voiced commands and to facilitate human interface with the machine. Systems that employ techniques to recover a linguistic message from an acoustic speech signal are called speech recognition (VR) systems. **FIG. 1** shows a basic VR system having a preemphasis filter **102,** an acoustic feature extraction (AFE) unit **104,** and a pattern matching engine **110.** The AFE unit **104** converts a series of digital voice samples into a set of measurement values (for example, extracted frequency components) called an acoustic feature vector. The pattern matching engine **110** matches a series of acoustic feature vectors with the templates contained in a VR acoustic model **112.** VR pattern matching engines generally employ either Dynamic Time Warping (DTW) or Hidden Markov Model (HMM) techniques. Both DTW and HMM are well known in the art, and are described in detail in Rabiner, L. R. and Juang, B. H., FUNDAMENTALS OF SPEECH RECOGNITION, Prentice Hall, 1993. When a series of acoustic features matches a template in the acoustic model **112,** the identified template is used to generate a desired format of output, such as an identified sequence of linguistic words corresponding to input speech.

As noted above, the acoustic model **112** is generally either a HMM model or a DTW model. A DTW acoustic model may be thought of as a database of templates associated with each of the words that need to be recognized. In general, a DTW template consists of a sequence of feature vectors that has been averaged ever many examples of the associated word. DTW pattern matching generally involves locating a stored template that has minimal distance to the input feature vector sequence representing input speech. A template used in an HMM based acoustic model contains a detailed statistical description of the associated speech utterance. In general, a HMM template stores a sequence of mean vectors, variance vectors and a set of transition probabilities. These parameters are used to describe the statistics of a speech unit and are estimated from many examples of the speech unit. HMM pattern matching generally involves generating a probability for each template in the model based on the series of input feature vectors associated with the input speech. The template having the highest probability is selected as the most likely input utterance.

"Training" refers to the process of collecting speech samples of a particular speech segment or syllable from one or more speakers in order to generate templates in the acoustic model **112.** Each template in the acoustic model is associated with a particular word or speech segment called an utterance class. There may be multiple templates in the acoustic model associated with the same utterance class. "Testing" refers to the procedure for matching the templates in the acoustic model to a sequence of feature vectors extracted from input speech. The performance of a given system depends largely upon the degree of match between the input speech of the end-user and the contents of the database, and hence on the match between the reference templates created through training and the speech samples used for VR testing.

The two common types of training are supervised training and unsupervised training. In supervised training, the utterance class associated with each set of training feature vectors is known a priori. The speaker providing the input speech is often provided with a script of words or speech segments corresponding to the predetermined utterance classes. The feature vectors resulting from the reading of the script may then be incorporated into the acoustic model templates associated with the correct utterance classes.

In unsupervised training, the utterance class associated with a set of training feature vectors is not known a priori. The utterance class must be correctly identified before a set of training feature vectors can be incorporated into the correct acoustic modei template. In unsupervised training, a mistake in identifying the utterance class for a set of training feature vectors can lead to a modification in the wrong acoustic model template. Such a mistake generally degrades, rather than improves, speech recognition performance. In order to avoid such a mistake, any modification of an acoustic model based on unsupervised training must generally be done very conservatively. A set of training feature vectors is incorporated into the acoustic model only if there is relatively high confidence that the utterance class has been correctly identified. Such necessary conservatism makes building an SD acoustic model through unsupervised training a very slow process. Until the SD acoustic model is built in this way, VR performance will probably be unacceptable to most users.

Optimally, the end-user provides speech acoustic feature vectors during both training and testing, so that the acoustic model **112** will match strongly with the speech of the end-user. An individualized acoustic model that is tailored to a single speaker is also called a speaker dependent (SD) acoustic model. Generating an SD acoustic model generally requires the end-user to provide a large amount of supervised training samples. First, the user must provide training samples for a large variety of utterance classes. Also, in order to achieve the best performance, the end-user must provide multiple templates representing a variety of possible acoustic environments for each utterance class. Because most users are unable or unwilling to provide the input speech necessary to generate an SD acoustic model, many existing VR systems instead use generalized acoustic models that are trained using the speech of many "representative" speakers. Such acoustic models are referred to as speaker independent (SI) acoustic models, and are designed to have the best performance over a broad range of users. SI acoustic models, however, may not be optimized to any single user. A VR system that uses an SI acoustic model will not perform as well for a specific user as a VR system that uses an SD acoustic model tailored to that user. For some users, such as those having a strong foreign accents, the performance of a VR system using an SI acoustic model can be so poor that they cannot effectively use VR services at all.

Optimally, an SD acoustic model would be generated for each individual user. As discussed above, building SD acoustic models using supervised training is impractical. But using unsupervised training to generate a SD acoustic model can take a long time, during which VR performance based on a partial SD acoustic model may be very poor. There is a need in the art for a VR system that performs reasonably well before and during the generation of an SD acoustic model using unsupervised training.

Further attention is drawn to the document EP-A-1 011 094, which relates to a method to prevent adaptation to misrecognized words in unsupervised or on-line automatic speech recognition systems using confidence measures or interpreting the user reaction to decide whether a recognized phoneme, several phonemes, a word, several words or a whole utterance should be used for adaptation of the speaker independent model set to a speaker adapted model set or not and, in case an adaptation is executed, how strong the adaptation with this recognized utterance or part of this recognized utterance should be performed. Furtheron, a verification of the speaker adaptation performance is proposed to secure that the recognition rate never decreases but only increases or stays at the same level.

Document US-A-5 734 793 relates to a system for recognizing spoken sounds from continuous speech which includes a plurality of classifiers and a selector. Each of the classifiers implements a discriminant function which is based on a polynomial expansion. By determining the polynomial coefficients of a discriminant function, the corresponding classifier is tuned to classify a specific spoken sound. The selector utilizes the classifier outputs to identify the spoken sounds. A method of using the system is also shown.

Furthermore, attention is drawn to the document US-A-5 091 947, which relates to a voice recognition apparatus including a coefficient memory for storing at least one coefficient for correcting a degree of similarity which is obtained by either one of the speaker-independent recognition and the speaker-dependent recognition. The apparatus also includes a voice identification circuit for comparing the degrees of similarity of the candidates obtained by either one of the speaker-independent recognition and the speaker-dependent recognition with corrected degrees of similarity of the candidates related to the other recognition type which are obtained by performing a predetermined operation to the degree of similarity of each candidate which is supplied from the other recognition type. Then the voice identification decides one candidate having the highest degree of similarity to be an identification result.

In accordance with the present invention a method for performing speech recognition, as set forth in claim 1, and an apparatus performing speech recognition, as set forth in H claim 5, are provided. Embodiments of the present invention are claimed in the dependent claims.

The methods and apparatus disclosed herein are directed to a novel and improved speech recognition (VR) system that utilizes a combination of H speaker independent (SI) and speaker dependent (SD) acoustic models. At least one SI acoustic model is used in combination with at least one SD acoustic model to provide a level of speech recognition performance that at least equals that of a purely SI acoustic model. The disclosed hybrid SI/SD VR system continually uses unsupervised training to update the acoustic templates in the one or more SD acoustic models. The hybrid VR system then uses the updated SD acoustic models, alone or in combination with the at least one SI acoustic model, to provide improved VR performance during VR testing.

The word "exemplary" is used herein to mean "serving as an example, instance, or illustration." Any embodiment described as an "exemplary embodiment" is not necessarily to be construed as being preferred or advantageous over another embodiment.

### BRIEF DESCRIPTION OF THE DRAWINGS

The features, objects, and advantages of the presently disclosed method and apparatus will become more apparent from the detailed description set forth below when taken in conjunction with the drawings in which like reference characters identify correspondingly throughout and wherein:

**FIG. 1** shows a basic speech recognition system;

**FIG. 2** shows a speech recognition system according to an exemplary embodiment;

**FIG. 3** shows a method for performing unsupervised training.

**FIG. 4** shows an exemplary approach to generating a combined matching score used in unsupervised training.

**FIG. 5** is a flowchart showing a method for performing speech recognition (testing) using both speaker independent (SI) and speaker dependent (SD) matching scores;

FIG. 6 shows an approach to generating a combined matching score from both speaker independent (SI) and speaker dependent (SD) matching scores; and

### DETAILED DESCRIPTION

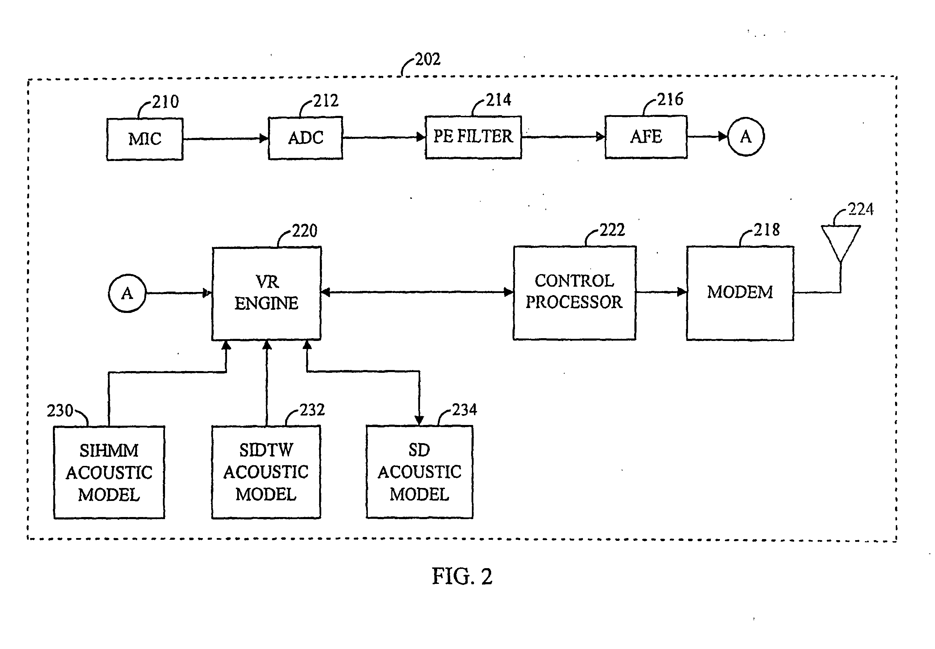

**FIG. 2** shows an exemplary embodiment of a hybrid speech recognition (VR) system as might be implemented within a wireless remote station **202.** In an exemplary embodiment, the remote station **202** communicates through a wireless channel (not shown) with a wireless communication network (not shown). For example, the remote station **202** may be a wireless phone communicating with a wireless phone system. One skilled in the art will recognize that the techniques described herein may be equally applied to a VR system that is fixed (non-portable) or does not involve a wireless channel.

In the embodiment shown, voice signals from a user are converted into electrical signals in a microphone (MIC) **210** and converted into digital speech samples in an analog-to-digital converter (ADC) **212.** The digital sample stream is then filtered using a preemphasis (PE) filter **214,** for example a finite impulse response (FIR) filter that attenuates low-frequency signal components.

The filtered samples are then analyzed in an acoustic feature extraction (AFE) unit **216.** The AFE unit **216** converts digital voice samples into acoustic feature vectors. In an exemplary embodiment, the AFE unit **216** performs a Fourier Transform on a segment of consecutive digital samples to generate a vector of signal strengths corresponding to different frequency bins. In an exemplary embodiment, the frequency bins have varying bandwidths in accordance with a bark scale. In a bark scale, the bandwidth of each frequency bin bears a relation to the center frequency of the bin, such that higher-frequency bins have wider frequency bands than lower-frequency bins. The bark scale is described in Rabiner, L. R. and Juang, B. H., FUNDAMENTALS OF SPEECH RECOGNITION, Prentice Hall, 1993 and is well known in the art.

In an exemplary embodiment, each acoustic feature vector is extracted from a series of speech samples collected over a fixed time interval.
In an exemplary embodiment, these time intervals overlap. For example, acoustic features may be obtained from 20-millisecond intervals of speech data beginning every ten milliseconds, such that each two consecutive intervals share a 10-millisecond segment. One skilled in the art would recognize that the time intervals might instead be non-overlapping or have non-fixed duration without departing from the scope of the embodiments described herein.

The acoustic feature vectors generated by the AFE unit **216** are provided to a VR engine **220,** which performs pattern matching to characterize the acoustic feature vector based on the contents of one or more acoustic models **230, 232,** and **234.**

In the exemplary embodiment shown in **FIG. 2**, three acoustic models are shown: a speaker-independent (SI) Hidden Markov Model (HMM) model **230,** a speaker-independent Dynamic Time Warping (DTW) model **232,** and a speaker-dependent (SD) acoustic model **234.** One skilled in the art will recognize that different combinations of SI acoustic models may be used in alternate embodiments. For example, a remote station 202 might include just the SIHMM acoustic model **230** and the SD acoustic model **234** and omit the SIDTW acoustic model **232.** Alternatively, a remote station **202** might include a single SIHMM acoustic model **230,** a SD acoustic model **234** and two different SIDTW acoustic models **232.** In addition, one skilled in the art will recognize that the SD acoustic model **234** may be of the HMM type or the DTW type or a combination of the two. In an exemplary embodiment, the SD acoustic model **234** is a DTW acoustic model.

As described above, the VR engine **220** performs pattern matching to determine the degree of matching between the acoustic feature vectors and the contents of one or more acoustic models **230, 232,** and **234.** In an exemplary embodiment, the VR engine **220** generates matching scores based on matching acoustic feature vectors with the different acoustic templates in each of the acoustic models **230, 232,** and **234.** For example, the VR engine **220** generates HMM matching scores based on matching a set of acoustic feature vectors with multiple HMM templates in the SiHMM acoustic model **230.** Likewise, the VR engine **220** generates DTW matching scores based on matching the acoustic feature vectors with multiple DTW templates in the SIDTW acoustic model **232.** The VR engine **220** generates matching scores based on matching the acoustic feature vectors with the templates in the SD acoustic model **234.**

As described above, each template in an acoustic model is associated with an utterance class. In an exemplary embodiment, the VR engine **220** combines scores for templates associated with the same utterance class to create a combined matching score to be used in unsupervised training. For example, the VR engine **220** combines SIHMM and SIDTW scores obtained from correlating an input set of acoustic feature vectors to generate a combined SI score. Based on that combined matching score, the VR engine **220** determines whether to store the input set of acoustic feature vectors as a SD template in the SD acoustic model **234.** In an exemplary embodiment, unsupervised training to update the SD acoustic model **234** is performed using exclusively SI matching scores. This prevents additive errors that might otherwise result from using an evolving SD acoustic model **234** for unsupervised training of itself. An exemplary method of performing this unsupervised training is described in greater detail below.

In addition to unsupervised training, the VR engine 220 uses the various acoustic models **(230, 232, 234)** during testing. In an exemplary embodiment, the VR engine 220 retrieves matching scores from the acoustic models **(230, 232, 234)** and generates combined matching scores for each utterance class. The combined matching scores are used to select the utterance class that best matches the input speech. The VR engine **220** groups consecutive utterance classes together as necessary to recognize whole words or phrases. The VR engine **220** then provides information about the recognized word or phrase to a control processor **222,** which uses the information to determine the appropriate response to the speech information or command. For example, in response to the recognized word or phrase, the control processor **222** may provide feedback to the user through a display or other user interface. In another example, the control processor **222** may send a message through a wireless modem **218** and an antenna **224** to a wireless network (not shown), initiating a mobile phone call to a destination phone number associated with the person whose name was uttered and recognized.

The wireless modem **218** may transmit signals through any of a variety of wireless channel types including CDMA, TDMA, or FDMA. In addition, the wireless modem **218** may be replaced with other types of communications interfaces that communicate over a non-wireless channel without departing from the scope of the described embodiments. For example, the remote station **202** may transmit signaling information through any of a variety of types of communications channel including land-line modems, T1/E1, ISDN, DSL, ethernet, or even traces on a printed circuit board (PCB).

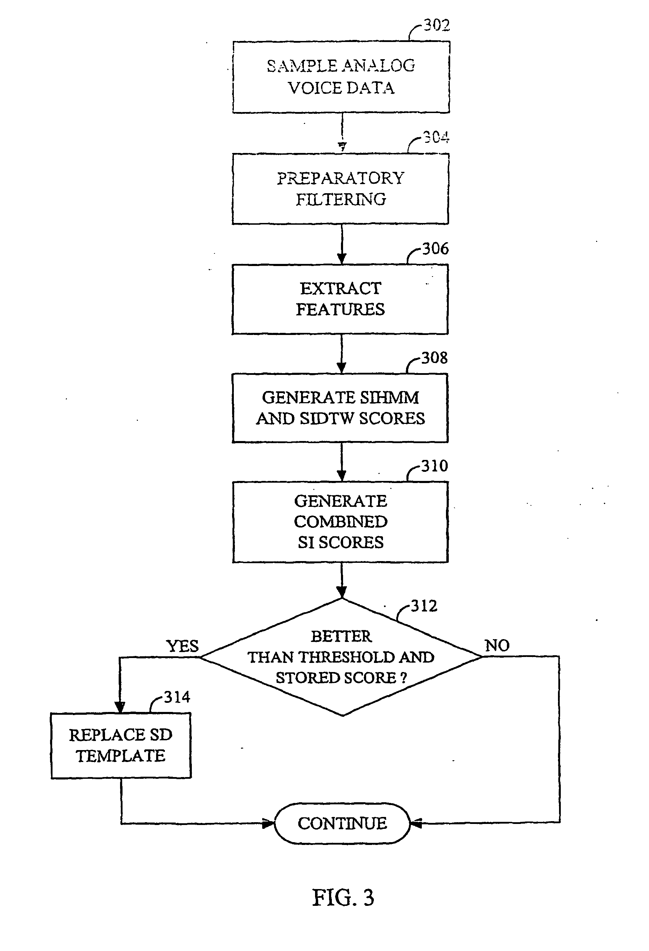

**FIG. 3** is a flowchart showing an exemplary method for performing unsupervised training. At step **302,** analog speech data is sampled in an analog-to-digital converter (ADC) **(212** in **FIG. 2****).** The digital sample stream is then filtered at step **304** using a preemphasis (PE) filter **(214** in FIG. **2****).** At step **306,** input acoustic feature vectors are extracted from the filtered samples in an acoustic feature extraction (AFE) unit (**216** in **FIG. 2**). The VR engine (**220** in **FIG. 2****)** receives the input acoustic feature vectors from the AFE unit **216** and performs pattern matching of the input acoustic feature vectors against the contents of the SI acoustic models (**230** and **232** in **FIG. 2**). At step **308,** the VR engine **220** generates matching scores from the results of the pattern matching. The VR engine **220** generates SIHMM matching scores by matching the input acoustic feature vectors with the SIHMM acoustic model **230,** and generates SIDTW matching scores by matching the input acoustic feature vectors with the SIDTW acoustic model **232.** Each acoustic template in the SIHMM and SIDTW acoustic models **(230** and **232)** is associated with a particular utterance class.
At step **310,** SIHMM and SIDTW scores are combined to form combined matching scores.

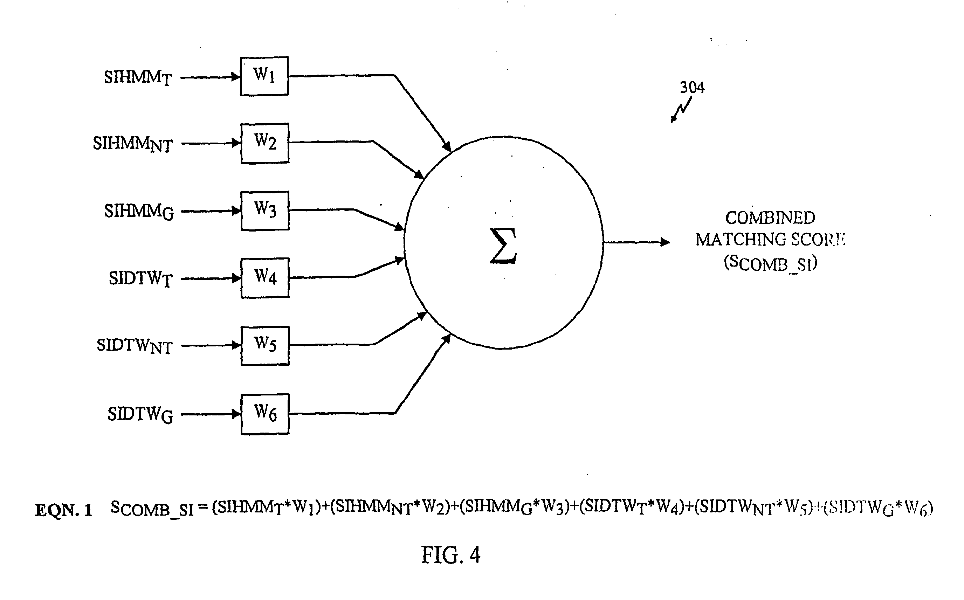

**FIG. 4** shows the generation of combined matching scores for use in unsupervised training. In the exemplary embodiment shown, the speaker independent combined matching score S_{COMB_SI} for a particular utterance class is a weighted sum according to **EQN. 1** as shown, where:
SIHMM_{T} is the SIHMM matching score for the target utterance class;
SIHMM_{NT} is the next best matching score for a template in the SIHMM acoustic model that is associated with a non-target utterance class (an utterance class other than the target utterance ciass);
SIHMM_{G} is the SIHMM matching score for the "garbage" utterance class;
SIDTW_{T} is the SIDTW matching score for the target utterance class;
SIDTW_{NT} is the next best matching score for a template in the SIDTW acoustic model that is associated with a non-target utterance class; and
SIDTW_{G} is the SiDTW matching score for the "garbage" utterance class.

The various individual matching scores SIHMMₙ and SIDTWₙ may be viewed as representing a distance value between a series of input acoustic feature vectors and a template in the acoustic model. The greater the distance between the input acoustic feature vectors and a template, the greater the matching score. A close match between a template and the input acoustic feature vectors yields a very low matching score. If comparing a series of input acoustic feature vectors to two templates associated with different utterances classes yields two matching scores that are nearly equal; then the VR system may be unable to recognize either is the "correct" utterance class.

SIHMM_{G} and SIDTW_{G} are matching scores for "garbage" utterance classes. The template or templates associated with the garbage utterance class are called garbage templates and do not correspond to a specific word or phrase. For this reason, they tend to be equally uncorrelated to all input speech. Garbage matching scores are useful as a sort of noise floor measurement in a VR system. Generally, a series of input acoustic feature vectors should have a much better degree of matching with a template associated with a target utterance class than with the garbage template before the utterance class can be confidently recognized.

Before the VR system can confidently recognize an utterance class as the "correct" one, the input acoustic feature vectors should have a higher degree of matching with templates associated with that utterance class than with garbage templates or templates associated other utterance classes. Combined matching scores generated from a variety of acoustic models can more confidently discriminate between utterance classes than matching scores based on only one acoustic model. In an exemplary embodiment, the VR system uses such combination matching scores to determine whether to replace a template in the SD acoustic model **(234** in **FIG. 2****)** with one derived from a new set of input acoustic feature vectors.

The weighting factors (W₁ ... W₆) are selected to provide the best training performance over all acoustic environments. In an exemplary embodiment, the weighting factors (W₁ ... W₅) are constant for all utterance classes. In other words, the Wₙ used to create the combined matching score for a first target utterance class is the same as the Wₙ value used to create the combined matching score for another target utterance class. In an alternate embodiment, the weighting factors vary based on the target utterance class. Other ways of combining shown in **FIG. 4** will be obvious to one skilled in the art, and are to be viewed as within the scope of the embodiments described herein. For example, more than six or less than six weighted inputs may also be used. Another obvious variation would be to generate a combined matching score based on one type of acoustic model. For example, a combined matching score could be generated based on SIHMM_{T}, SIHMM_{NT}, and SIHMM_{G}. Or, a combined matching score could be generated based on SIDTW_{T}, SIDTW_{NT}, and SIDTW_{G}.

In an exemplary embodiment, W₁ and W₄ are negative numbers, and a greater (or less negative) value of S_{COMB} indicates a greater degree of matching (smaller distance) between a target utterance class and a series of input acoustic feature vectors. One of skill in the art will appreciate that the signs of the weighting factors may easily be rearranged such that a greater degree of matching corresponds to a lesser value without departing from the scope of the disclosed embodiments.

Turning back to **FIG. 3****,** at step **310,** combined matching scores are generated for utterance classes associated with templates in the HMM and DTW acoustic models **(230** and **232).** In an exemplary embodiment, combined matching scores are generated only for utterance classes associated with the best *n* SIHM matching scores and for utterance classes associated with the best *m* SIDTW matching scores. This limit may be desirable to conserve computing resources, even though a much larger amount of computing power is consumed while generating the individual matching scores. For example, if *n=m*=3, combined matching scores are generated for the utterance classes associated with the top three SIHMM and utterance classes associated with the top three SIDTW matching scores. Depending on whether the utterance classes associated with the top three SiHMM matching scores are the same as the utterance classes associated with the top three SIDTW matching scores, this approach will produce three to six different combined matching scores.

At step **312,** the remote station **202** compares the combined matching scores with the combined matching scores stored with corresponding templates (associated with the same utterance class) in the SD acoustic model. If the new series of input acoustic feature vectors has a greater degree of matching than that of an older template stored in the SD model for the same utterance class, then a new SD template is generated from the new series of input acoustic feature vectors. In an embodiment wherein a SD acoustic model is a DTW acoustic model, the series of input acoustic vectors itself constitutes the new SD template. The older template is then replaced with the new template, and the combined matching score associated with the new template is stored in the SD acoustic model to be used in future comparisons.

In an alternate embodiment, unsupervised training is used to update one or more templates in a speaker dependent hidden markov model (SDHMM) acoustic model. This SDHMM acoustic model could be used either in place of an SDDTW model or in addition to an SDDTW acoustic model within the SD acoustic model **234.**

In an exemplary embodiment, the comparison at step **312** also includes comparing the combined matching score of a prospective new SD template with a constant training threshold. Even if there has not yet been any template stored in a SD acoustic model for a particular utterance class, a new template will not be stored in the SD acoustic model unless it has a combined matching score that is better (indicative of a greater degree of matching) than the training threshold value.

In an alternate embodiment, before any templates in the SD acoustic model have been replaced, the SD acoustic model is populated by default with templates from the SI acoustic model. Such an initialization provides an alternate approach to ensuring that VR performance using the SD acoustic model will start out at least as good as VR performance using just the SI acoustic model. As more and more of the templates in the SD acoustic model are updated, the VR performance using the SD acoustic model will surpass VR performance using just the SI acoustic model.

In an alternate embodiment, the VR system allows a user to perform supervised training. The user must put the VR system into a supervised training mode before performing such supervised training. During supervised training, the VR system has a priori knowledge of the correct utterance class. If the combined matching score for the input speech is better than the combined matching score for the SD template previously stored for that utterance class, then the input speech is used to form a replacement SD template. In an alternate embodiment, the VR system allows the user to force replacement of existing SD templates during supervised training.

The SD acoustic model may be designed with room for multiple (two or more) templates for a single utterance class. In an exemplary embodiment, two templates are stored in the SD acoustic model for each utterance class.
The comparison at step **312** therefore entails comparing the matching score obtained with a new template with the matching scores obtained for both templates in the SD acoustic model for the same utterance class. If the new template has a better matching score than either older template in the SD acoustic model, then at step **314** the SD acoustic model template having the worst matching score is replaced with the new template. If the matching score of the new template is no better than either older template, then step **314** is skipped. Additionally, at step **312,** the matching score obtained with the new template is compared against a matching score threshold. So, until new templates having a matching score that is better than the threshold are stored in the SD acoustic model, the new templates are compared against this threshold value before they will be used to overwrite the prior contents of the SD acoustic model. Obvious variations, such as storing the SD acoustic model templates in sorted order according to combined matching score and comparing new matching scores only with the lowest, are anticipated and are to be considered within the scope of the embodiments disclosed herein. Obvious variations on numbers of templates stored in the acoustic model for each utterance class are also anticipated. For example, the SD acoustic model may contain more than two templates for each utterance class, or may contain different numbers of templates for different utterance classes.

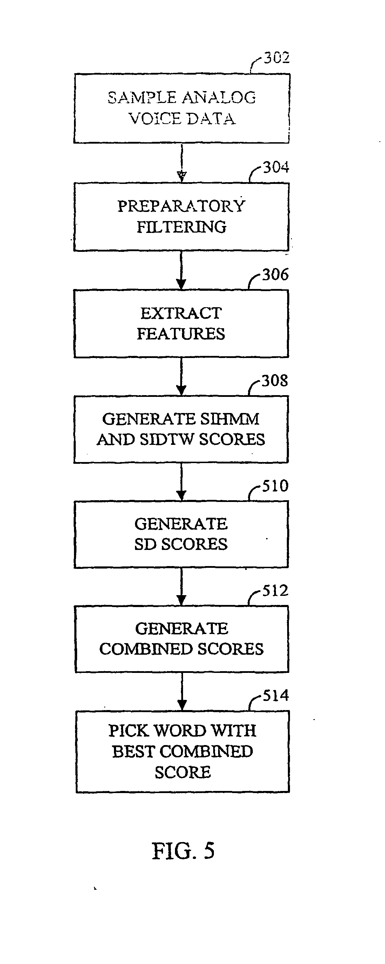

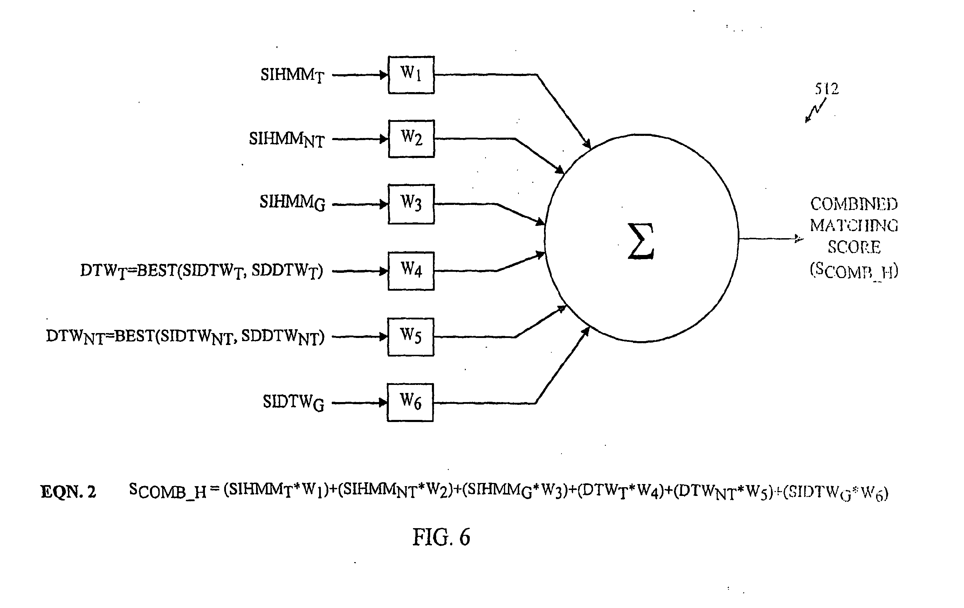

**FIG. 5** is a flowchart showing an exemplary method for performing VR testing using a combination of SI and SD acoustic models. Steps **302, 304,** 306, and 308 are the same as described for **FIG. 3**. The exemplary method diverges from the method shown in **FIG. 3** at step **510.** At step **510,** the VR engine **220** generates SD matching scores based on comparing the input acoustic feature vectors with templates in the SD acoustic model. In an exemplary embodiment, SD matching scores are generated only for utterance classes associated with the best *n* SIHMM matching scores and the best *m* SIDTW matching scores. In an exemplary embodiment, *n*=*m*=3. Depending on the degree of overlap between the two sets of utterance classes, this will result in generation of SD matching scores for three to six utterance classes. As discussed above, the SD acoustic model may contain multiple templates for a single utterance class. At step **512,** the VR engine **220** generates hybrid combined matching scores for use in VR testing. In an exemplary embodiment, these hybrid combined matching scores are based on both individual SI and individual SD matching scores. At step **514,** the word or utterance having the best combined matching score is selected and compared against a testing threshold. An utterance is only deemed recognized if its combined matching score exceeds this testing threshold. In an exemplary embodiment, the weights [W₁ ... W₆] used to generate combined scores for training (as shown in **FIG. 4**) are equal to the weights [W₁ ... W₆] used to generate combined scores for testing (as shown in **FIG. 6**), but the training threshold is not equal to the testing threshold.

**FIG. 6** shows the generation of hybrid combined matching scores performed at step **512.** The exemplary embodiment shown operates identically to the combiner shown in **FIG. 4****,** except that the weighting factor W₄ is applied to DTW_{T} instead of SIDTW_{T} and the weighting factor W₅ is applied to DTW_{NT} instead of SIDTW_{NT}. DTW_{T} (the dynamic time warping matching score for the target utterance class) is selected from the best of the SIDTW and SDDTW scores associated with the target utterance class. Similarly, DTW_{NT} (the dynamic time warping matching score for the remaining non-target utterance classes) is selected from the best of the SIDTW and SDDTW scores associated with non-target utterance classes.

The SI/SD hybrid score S_{COMB_H} for a particular utterance class is a weighted sum according to **EQN. 2** as shown, where SIHMM_{T}, SIHMM_{NT}, SIHMM_{G}, and SIDTW_{G} are the same as in **EQN. 1.** Specifically, in **EQN. 2:**
SIHMM_{T} is the SIHMM matching score for the target utterance class;
SIHMM_{NT} is the next best matching score for a template in the SIHMM acoustic model that is associated with a non-target utterance class (an utterance class other than the target utterance class);
SIHMM_{G} is the SIHMM matching score for the "garbage" utterance class;
DTW_{T} is the best DTW matching score for SI and SD templates corresponding to the target utterance class;
DTW_{NT} is the best DTW matching score for SI and SD templates corresponding to non-target utterance classes; and
SIDTW_{G} is the SIDTW matching score for the "garbage" utterance class.
Thus, the SI/SD hybrid score S_{COMB}__{H} is a combination of individual SI and SD matching scores. The resulting combination matching score does not rely entirely on either SI or SD acoustic models. If the matching score SIDTW_{T} is better than any SDDTW_{T} score, then the SI/SD hybrid score is computed from the better SIDTW_{T} score. Similarly, if the matching score SDDTW_{T} is better than any SIDTW_{T} score, then the SI/SD hybrid score is computed from the better SDDTW_{T} score. As a result, if the templates in the SD acoustic model yield poor matching scores, the VR system may still recognize the input speech based on the SI portions of the SI/SD hybrid scores. Such poor SD matching scores might have a variety of causes including differences between acoustic environments during training and testing or perhaps poor quality input used for training.

In an alternate embodiment, the SI scores are weighted less heavily than the SD scores, or may even be ignored entirely. For example, DTW_{T} is selected from the best of the SDDTW scores associated with the target utterance class, ignoring the SIDTW scores for the target utterance class. Also, DTW_{NT} may be selected from the best of either the SIDTW or SDDTW scores associated with non-target utterance classes, instead of using both sets of scores.

Though the exemplary embodiment is described using only SDDTW acoustic models for speaker dependent modeling, the hybrid approach described herein is equally applicable to a VR system using SDHMM acoustic models or even a combination of SDDTW and SDHMM acoustic models. For example, by modifying the approach shown in **FIG. 6****,** the weighting factor W₁ could be applied to a matching score selected from the best of SIHMM_{T} and SDHMM_{T} scores. The weighting factor W₂ could be applied to a matching score selected from the best of SIHMM_{NT} and SDHM_{MNT} scores.

Thus, disclosed herein is a VR method and apparatus utilizing a combination of SI and SD acoustic models for improved VR performance during unsupervised training and testing. Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof. Also, though the embodiments are described primarily in terms of Dynamic Time Warping (DTW) or Hidden Markov Model (HMM) acoustic models, the described techniques may be applied to other types of acoustic models such as neural network acoustic models.

Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. In the alternative, the processor and the storage medium may reside as discrete components in a user terminal.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the invention. Thus, the present invention is not intended to be limited to the embodiments shown herein but is to be accorded the widest scope consistent with the principles and novel features disclosed herein.

## Claims

1. A method for performing unsupervised training for speech recognition comprising:
performing pattern matching (308) of a first input speech segment with at least one speaker independent acoustic template of each of a plurality of speaker independent models to produce a plurality of input pattern matching scores and to determine a respective recognized utterance class;
combining the plurality of input pattern matching scores associated with the same utterance class to generate a combined matching score;
comparing (312) the combined matching score with a pattern matching score associated with a stored acoustic template of a speaker dependent model corresponding to the recognized utterance class;
if the combined score is better than the pattern matching score, replacing (314) the stored acoustic template of the speaker dependent model with a new template derived from the first input speech segment and replacing the pattern matching score associated with the stored acoustic template of the speaker dependent model with the combined score associated with the new template.

2. The method of claim 1 wherein said performing pattern matching further comprises:
performing hidden markov model (HMM) pattern matching (308) of the first input speech segment with at least one HMM template to generate at least one HMM matching score;
performing dynamic time warping (DTW) pattern matching (308) of the first input speech segment with at least one DTW template to generate at least one DTW matching score; and
performing at least one weighted sum (310) of said at least one HMM matching score and said at least one DTW matching score to generate said at least one input pattern matching score.

3. The method of claim 1, further comprising:
performing (308) pattern matching of a second input speech segment with at least one speaker independent acoustic template to generate at least one speaker independent matching score;
performing (510) pattern matching of the second input speech segment with the stored acoustic template to generate a speaker dependent matching score; and
combining (512) the at least one speaker independent matching score with the speaker dependent matching score to generate at least one combined matching score.

4. The method of claim 3 further comprising identifying an utterance class associated with the best of the at least one combined matching score.

5. An apparatus (202) for performing unsupervised training for speech recognition comprising:
means for performing pattern matching of a first input speech segment with at least one speaker independent acoustic template of each of a plurality of speaker independent models to produce a plurality of input pattern matching scores and to determine a respective recognized utterance class;
means for combining the plurality of input pattern matching scores associated with the same utterance class to generate a combined matching score;
means for comparing the combined matching score with a pattern matching score associated with a stored acoustic template of a speaker dependent model corresponding to the recognized utterance class,
means for replacing the stored acoustic template of the speaker dependent model with a new template derived from the first input speech segment and for replacing the pattern matching score associated with the stored acoustic template of the speaker dependent model with the at least one input pattern matching score associated with the new template, wherein the stored acoustic template and the pattern matching score is replaced, if the combined score is better than the pattern matching score.

## Patentansprüche

1. Ein Verfahren zum Durchführen von nicht überwachtem Training für Spracherkennung, das Folgendes aufweist:
Durchführen von Musterabgleich (308) von einem ersten Eingabesprachsegment mit wenigstens einer sprecherunabhängigen Akustik-Template bzw. -Vorlage von jedem von einer Vielzahl von sprecherunabhängigen Modellen, um eine Vielzahl von Eingabemusterabgleichswerte zu erzeugen und, um eine entsprechende erkannte Äußerungsklasse zu bestimmen;
Kombinieren der Vielzahl von Eingabemusterabgleichswerten, assoziiert mit der gleichen Äußerungsklasse, um einen kombinierten Abgleichswert zu generieren;
Vergleichen (312) des kombinierten Abgleichswerts mit einem Musterabgleichswert, assoziiert mit einer gespeicherten Akustik-Template eines sprecherabhängigen Modells, entsprechend der erkannten Äußerungsklasse;
wenn der kombinierte Wert besser als der Musterabgleichswert ist, Ersetzen (314) der gespeicherten Akustik-Template des sprecherabhängigen Modells mit einer neuen Template bzw. Vorlage, abgeleitet von dem ersten Eingabesprachsegment und Ersetzen des Musterabgleichswerts, assoziiert mit der gespeicherten Akustik-Template des sprecherabhängigen Modells mit dem kombinierten Wert, assoziiert mit der neuen Template.

2. Verfahren nach Anspruch 1, wobei das Durchführen des Musterabgleichs weiterhin Folgendes aufweist:
Durchführen von Hidden-Markov-Model-(HMM)-Musterabgleich (308) des ersten Eingabesprachsegments mit wenigstens einem HMM-Template, um wenigstens einen HMM-Abgleichswert zu generieren;
Durchführen von Dynamic-Time-Warping-(DTW)-Musterabgleich (308) des ersten Eingabesprachsegments mit wenigstens einem DTW-Template, um wenigstens einen DTW-Abgleichswert zu generieren; und
Durchführen von wenigstens einer gewichteten Summe (310) von dem wenigstens einen HMM-Abgleichswert und dem wenigstens einen DTW-Abgleichswert, um wenigstens einen Eingabemusterabgleichswert zu generieren.

3. Verfahren nach Anspruch 1, das weiterhin Folgendes aufweist:
Durchführen (308) des Musterabgleichs eines zweiten Eingabesprachsegments mit wenigstens einer sprecherunabhängigen Akustik-Template, um wenigstens einen sprecherunabhängigen Abgleichswert zu generieren;
Durchführen (510) des Musterabgleichs des zweiten Eingabesprachsegments mit der gespeicherten Akustik-Template, um einen sprecherabhängigen Abgleichswert zu generieren; und
Kombinieren (512) des wenigstens einen sprecherunabhängigen Abgleichswert mit dem sprecherabhängigen Abgleichswert, um wenigstens einen kombinierten Abgleichswert zu generieren.

4. Verfahren nach Anspruch 3, das weiterhin das Identifizieren einer Äußerungsklasse assoziiert mit dem besten des wenigstens einen kombinierten Abgleichswert zu identifizieren.

5. Eine Vorrichtung (202) zum Durchführen von nicht überwachtem Training für Spracherkennung, das Folgendes aufweist:
Mittel zum Durchführen von Musterabgleich eines ersten Eingabesprachsegments mit wenigstens einer sprecherunabhängigen Akustik-Template bzw. -Vorlage von jedem von einer Vielzahl von sprecherunabhängigen Modellen, um eine Vielzahl von Eingabemusterabgleichswerten zu erzeugen und, um eine entsprechende erkannte Äußerungsklasse zu bestimmen;
Mittel zum Kombinieren der Vielzahl von Eingabemusterabgleichswerten, assoziiert mit der gleichen Äußerungsklasse, um einen kombinierten Abgleichswert zu generieren;
Mittel zum Vergleichen des kombinierten Abgleichswerts mit einem Musterabgleichswert, assoziiert mit einem gespeicherten Akustik-Template eines sprecherabhängigen Modells, entsprechend der erkannten Äußerungsklasse;

## Revendications

1. Procédé pour réaliser un apprentissage non-supervisé pour une reconnaissance de parole, comprenant :
effectuer une recherche de concordance de motif (308) d'un premier segment de parole d'entrée avec au moins un modèle - acoustique indépendant du locuteur de chacun d'une pluralité de modèles indépendants du locuteur, pour produire une pluralité de scores de concordance de motif d'entrée et pour déterminer une classe d'énoncés reconnus respective ;
combiner la pluralité de scores de concordance de motif associée à la même classe d'énoncés pour produire un score de concordance combiné ;
comparer (312) le score de concordance combiné à un score de concordance de motif associé à un modèle acoustique mémorisé d'un modèle dépendant du locuteur correspondant à la classe d'énoncés reconnus ;
si le score combiné est meilleur que le score de concordance de motif, remplacer (314) le modèle acoustique mémorisé du modèle dépendant du locuteur par un nouveau modèle dérivé du premier segment de parole d'entrée et remplacer le score de concordance de motif associé au modèle acoustique mémorisé du modèle dépendant du locuteur par le score combiné associé au nouveau modèle.

2. Procédé selon la revendication 1, dans lequel la réalisation d'une recherche de concordance de motif comprend en outre :
effectuer une recherche de concordance de motif (308) selon le modèle de Markov caché (HMM) du premier segment de parole d'entrée avec au moins un modèle HMM pour produire au moins un score de concordance HMM ;
effectuer une recherche de concordance de motif (308) à étirement temporel dynamique (DTW) du premier segment de parole d'entrée avec au moins un modèle DTW pour produire au moins un score de concordance DTW ; et
effectuer au moins une somme pondérée (310) dudit au moins un score de concordance HMM et dudit au moins un score de concordance DTW pour produire ledit au moins un score de concordance de motif d'entrée.

3. Procédé selon la revendication 1, comprenant en outre:
effectuer (308) une recherche de concordance de motif d'un deuxième segment de parole d'entrée avec au moins un modèle acoustique indépendant du locuteur pour produire au moins un score de concordance indépendant du locuteur ;
effectuer (510) une recherche de concordance de motif du deuxième segment de parole d'entrée avec le modèle acoustique mémorisé pour produire un score de concordance dépendant du locuteur ; et
combiner (512) ledit au moins un score de concordance indépendant du locuteur avec le score de concordance dépendant du locuteur pour produire au moins un score de concordance combiné.

4. Procédé selon la revendication 3, comprenant en outre l'identification d'une classe d'énoncés associée au meilleur desdits au moins un score de concordance combiné.

5. Dispositif (202) pour effectuer un apprentissage non-supervisé pour une reconnaissance de parole, comprenant :
des moyens pour effectuer une recherche de concordance de motif d'un premier segment de parole d'entrée avec au moins un modèle acoustique indépendant du locuteur de chacun d'une pluralité de modèles indépendants du locuteur, pour produire une pluralité de scores de concordance de motif d'entrée et pour déterminer une classe d'énoncés reconnus respective ;
des moyens pour combiner la pluralité de scores de concordance de motif associée à la même classe d'énoncés pour produire un score de concordance combiné ;
des moyens pour comparer le score de concordance combiné à un score de concordance de motif associé à un modèle acoustique mémorisé d'un modèle dépendant du locuteur correspondant à la classe d'énoncés reconnus ;
des moyens pour remplacer le modèle acoustique mémorisé du modèle dépendant du locuteur par un nouveau modèle dérivé du premier segment de parole d'entrée et pour remplacer le score de concordance de motif associé au modèle acoustique mémorisé du modèle dépendant du locuteur par ledit au moins un score de concordance de motif d'entrée associé au nouveau modèle, dans lesquels le modèle acoustique mémorisé et le score de concordance de motif sont remplacés, si le score combiné est meilleur que le score de concordance de motif.
